Europäisches Patentamt

European Patent Office    (11) Publication number: **0 351 487**

Office européen des brevets    **A1**

# (12) EUROPEAN PATENT APPLICATION

(21) Application number: **89103493.6**    (51) Int. Cl.⁴: **F16L 43/00**

(22) Date of filing: **28.02.89**

(30) Priority: **22.07.88 IT 4164488**

(43) Date of publication of application:
**24.01.90 Bulletin 90/04**

(84) Designated Contracting States:
**AT BE CH DE FR LI NL**

(71) Applicant: **FENPEL S.r.l.**
**Via N. Tommaseo 15**
**I-35131 Padova(IT)**

(72) Inventor: **Mazzonetto, Giuseppe**
**Via Mira, 14**
**I-35018 San Martino di Lupari (Padova)(IT)**
Inventor: **Gasparini, Filippo**
**Via Bassano del Grappa, 4**
**I-30035 Mirano (Venezia)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Curved pipe fitting.**

㊲ The present invention relates to a curved pipe fitting (1) comprising at least two sheets of ferrous or non-ferrous metallic material shaped so as to form complementary half-shells (2, 3). The coupling flaps (4-7) of the half-shells are arranged mutually head-on and are mutually welded by melting them or by melting added material.

_Fig.1_

## CURVED PIPE FITTING

The present invention relates to a curved pipe fitting.

Metal pipes are currently known and used in the field of sheet metal working for rain gutters; said pipes are generally of copper, stainless steel, aluminum, pre-painted steel, zinc and alloys thereof etc. and are constituted by panels of sheet metal curved until the two flaps meet; said flaps are subsequently coupled by fold seaming or lap welding.

The presence of the fold seam or lap welding poses considerable problems in installing the pipe fittings if they have to be shortened or adapted on-site.

The usual position of the seams furthermore coincides with the water flow region so that dripping may easily occur as said seams are not water-tight.

The main aim of the present invention is to eliminate the disadvantages described above in known curved pipe fittings used in the field of sheet metal working, in particular by providing a curved pipe fitting which has no seams, wrinkles or lap welds.

A not less important object is to provide a curved pipe fitting which is easier to work and install than current ones and therefore is more flexibly adaptable.

Another important object is to provide a curved pipe fitting the application whereof provides the user with a set of modular elements adapted to obtain an improved rain gutter pipe with respect to currently commercially available products.

Not least object is to provide a pipe fitting which can be manufactured with no particular problems in a wide range of curvatures, diameters and shapes.

This aim, these objects and others which will become apparent hereinafter are achieved by a curved pipe fitting as defined in the appended claims.

The characteristics and advantages of the invention will become apparent from the detailed description of a preferred embodiment and of some variated embodiments, illustrated only by way of non-limitative example in the accompanying drawings, wherein:

figure 1 is a perspective view of a curved pipe fitting according to the invention, with cylindrical cross section and with coupling flaps arranged at the lateral regions of minimum deformation, in a step preceding their welding;

figure 2 is a perspective view of the curved pipe fitting of figure 1 after welding;

figure 3 is an enlarged perspective detail view of a part of the surface of the fitting of figure 2 comprising the flap welding region;

figure 4 is a view of an example of application of the fitting of figure 1;

figure 5 is a view of a first variated embodiment of the curved pipe fitting according to the invention, with a circular cross section, in a step preceding its welding;

figure 6 is a view of a second variated embodiment, with square cross-section duct, of the curved pipe fitting according to the invention after the flaps have been welded;

figure 7 is a view of a third variated embodiment, with rectangular cross section duct, of the curved pipe fitting according to the invention after its flaps have been welded.

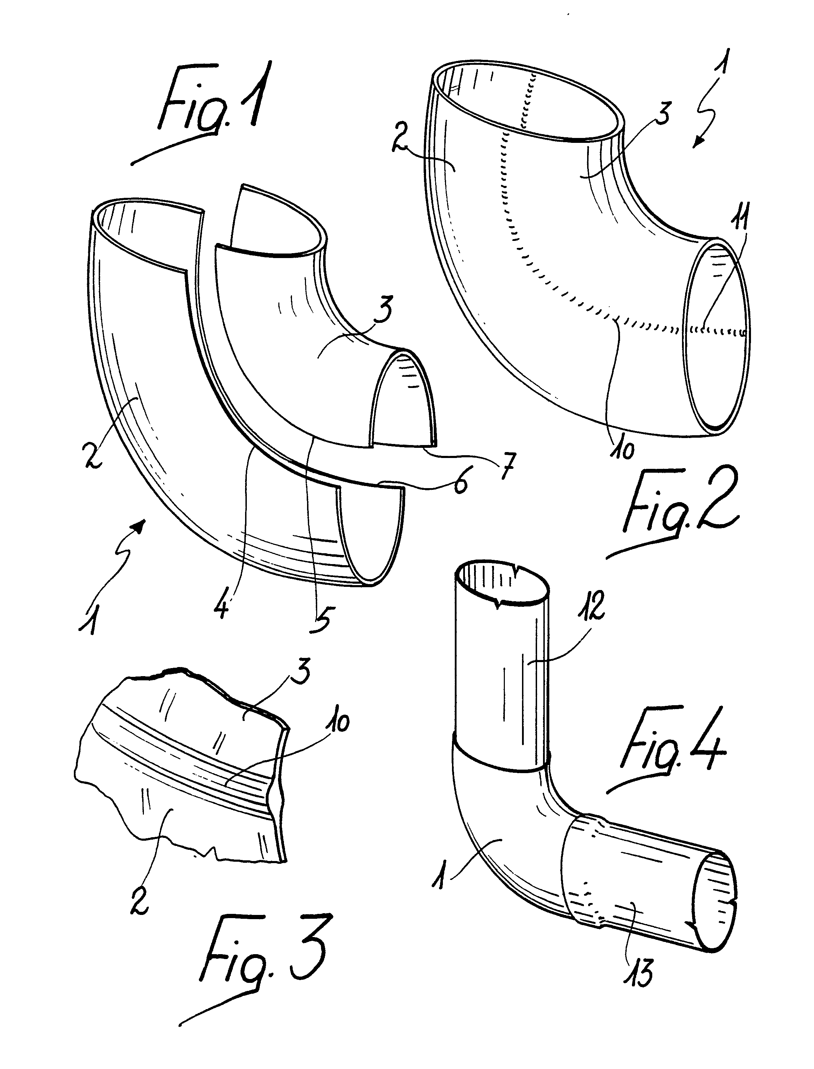

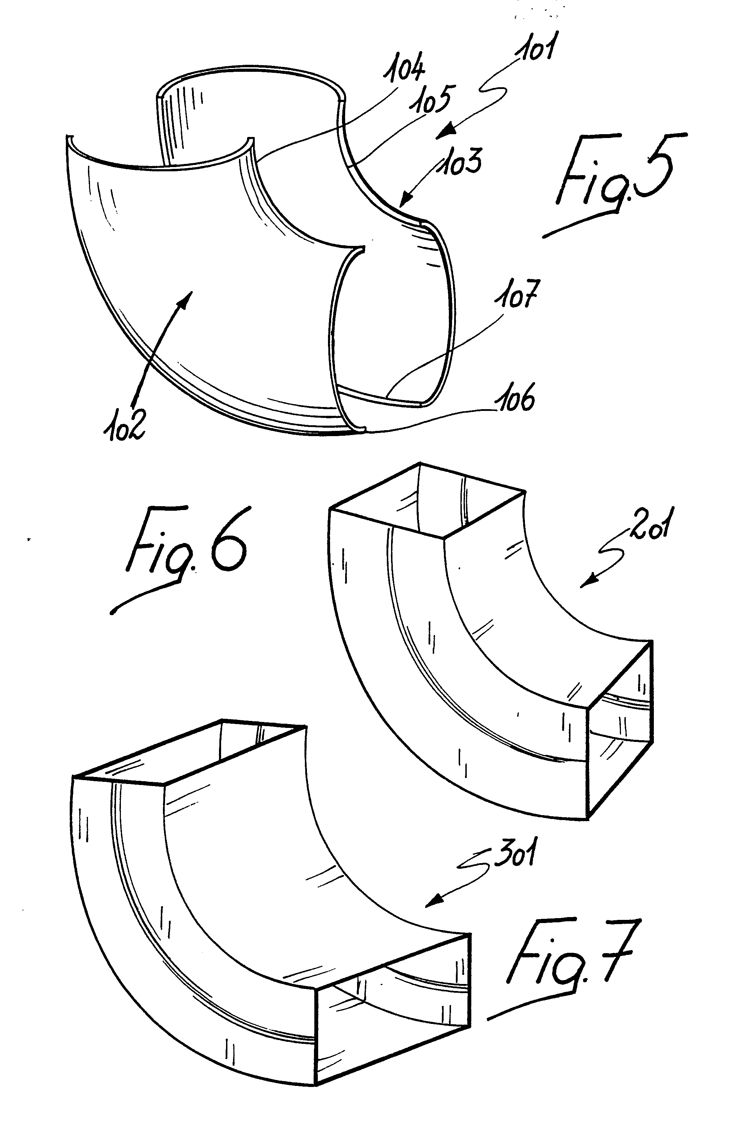

With reference to the above described figures 1 to 4, a curved pipe fitting according to the invention is generally indicated by the reference numeral 1, and comprises two sheets of preferably metallic material shaped so as to form two complementary half-shells, respectively 2 and 3, each of half-cylindrical cross-section, the coupling flaps whereof, respectively 4, 5, 6 and 7, are arranged at the lateral regions of minimum deformation of the curve (regions of larger radius).

A subsequent butt welding (by melting added material and/or by melting the flaps) joins the pairs of flaps 4 and 5 and respectively 6 and 7, forming very slight lateral enlargements 10 and 11 on the surfaces of the pipe fitting, as can be seen in figures 2 and 3; said fitting, being completely smooth, can therefore be interposed between two sections of rectilinear piping 12 and 13 to compose aesthetically and qualitatively improved drain pipes with respect to those currently in use.

As it has no folded seams, the pipe fitting is not subject to the dripping which frequently occurs in known rain gutters.

With reference now to the previously mentioned figure 5, a variated embodiment of the curved pipe fitting, with circular cross section, is generally indicated by the reference numeral 101, and comprises two half shells 102 and 103 formed by sheets of shaped metallic material, the coupling flaps whereof, respectively 104, 105, 106 and 107, are arranged at a substantially vertical plane and are butt-welded.

The curved pipe fittings illustrated in figures 6 and 7 and respectively generally indicated by the reference numerals 201 and 301 are obtained with the same technical concept as the previous embodiments.

Curved pipe fittings with any cross section, whether polygonal or ovoid or elliptic, can naturally be produced according to the same technical concept.

From what has been described and illustrated above it is thus apparent that the curved pipe fitting according to the invention fully achieves the intended aim and objects, as it is capable of completely eliminating the disadvantages of the known art.

The invention thus conceived is susceptible to numerous modifications and variations, all of which are within the scope of the inventive concept.

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A curved pipe fitting, characterized in that it comprises at least two sheets (2, 3; 102, 103) preferably of ferrous or non-ferrous metallic material, shaped to form complementary half-shells the coupling flaps (4-7; 104-107) whereof are arranged facing each other head-on and are mutually associated with weldings by melting added material and/or by melting said flaps.

2. A curved pipe fitting according to claim 1, characterized in that the surfaces of said at least two half-shells (2, 3; 102, 103) are completely smooth.

3. A curved pipe fitting according to claim 1, characterized in that it has any transverse cross section, preferably a polygonal, circular, ovoid or elliptical one.

4. A curved pipe fitting according to claim 1, characterized in that said coupling flaps (2, 3; 102, 103) of said half-shells are arranged at any longitudinal region of its extension.

5. A curved pipe fitting, characterized in that it constitutes a complete curve or parts thereof.

EP 0 351 487 A1

Fig.1

Fig.2

Fig.3

Fig.4

Fig.5

Fig.6

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A- 346 581 (C. SCHMÜCKER)<br>* Page 1, lines 1-4,19-21; figure 5 *<br>--- | 1,2 | F 16 L 43/00 |
| A | DE-U-8 801 684 (KABEL- UND METALLWERKE GHH AG)<br>* Page 1, paragraph 2 *<br>--- | 1,2 | |
| A | DE-U-8 700 090 (F. BURCHER)<br>* Figure 1 *<br>----- | 1,3 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 17-10-1989 | BARTSCH A.W. |

EPO FORM 1503 03.82 (P0401)